# EUROPÄISCHE PATENTSCHRIFT

(11) **EP 2 565 525 B1**
(45) Veröffentlichungstag und Bekanntmachung des Hinweises auf die Patenterteilung: **28.10.2015**
(21) Anmeldenummer: 12006066.0
(22) Anmeldetag: 27.08.2012
(51) Int. Cl.: F21V 5/04, F21V 13/04, G02B 19/00, F21Y 101/02, F21S 4/00, F21W 131/103, F21W 131/101, F21Y 103/00

(54) **Tunnelleuchte**
Tunnel light
Lampe de tunnel

(30) Priorität: 30.08.2011 DE 102011111953
(43) Veröffentlichungstag der Anmeldung: 06.03.2013
(73) Patentinhaber: Bartenbach Holding GmbH, 6071 Aldrans (AT)
(72) Erfinder: Bartenbach, Christian, 6071 Aldrans (AT)
(74) Vertreter: Thoma, Michael

(56) Entgegenhaltungen:
- WO-A1-2011/051127
- DE-A1-102008 019 944
- US-A1- 2007 201 225
- US-A1- 2010 014 290

## Beschreibung

Die vorliegende Erfindung betrifft eine Straßenleuchte, insbesondere Tunnelleuchte, mit einer Mehrzahl von punktförmigen Lichtquellen, insbesondere LEDs, denen jeweils eine asymmetrische Linse zur Erzielung einer asymmetrischen Lichtstärkeverteilung und gleichmäßigen Ausleuchtung der Fahrbahn- und ggf. Tunneloberflächen und des über der Fahrbahn liegenden Raums zugeordnet sind, wobei die Linsen derart geformt sind, dass die von den Lichtquellen abgegebenen Lichtströme zumindest vorwiegend in Fahrtrichtung strahlen und auf einen in Fahrtrichtung betrachtet hinter der Lichtquelle liegenden Halbraum beschränkt sind.

Eine derartige Straßenleuchte ist beispielsweise aus der DE 10 2008 019 944 bekannt.

Bei Straßenbeleuchtungen wird generell bei einer guten visuellen Erkennbarkeit von Straßen- und Umgebungskonturen sowie Hindernissen und Fahrzeugen insbesondere auch eine Blendungsfreiheit angestrebt. Einerseits sind natürlich hohe Leuchtdichten auf der Fahrbahn bzw. hohe Lichtströme der Lichtquellen erwünscht, um eine gute Erkennbarkeit von Hindernissen zu erreichen. Andererseits führen Leuchten mit solchermaßen hohen Leuchtdichten oftmals zu Blendungserscheinungen, insbesondere zur Direktblendung, wenn die jeweilige Person im Strahlungsbereich der Leuchte näherungsweise oder gar ganz entgegen der Strahlungsachse in das Zentrum des Strahlungsbereichs blickt. Insofern werden herkömmliche Straßenleuchten oftmals in relativ großer Höhe montiert, so dass auch bei größerer Beabstandung der Lichtquellen durch entsprechend senkrecht nach unten gerichtete Lichtabgabe die Fahrbahnoberfläche hell ausgeleuchtet werden kann, ohne allzu hohe Blendungserscheinungen zu erzeugen. Bei Tunnelleuchten ist dies allerdings aufgrund der begrenzten Bauhöhe von Tunnelbauwerken nicht möglich. Ferner treten bei Tunnelbeleuchtungen oftmals Abschattungen durch die Fahrzeuge, die große Schattenräume im Tunnel bewirken, sowie ein Flickern auf, d.h. ein ständiger Wechsel zwischen hell und dunkel beispielsweise auf dem Armaturenbrett eines Fahrzeugs, wenn das Fahrzeug im Tunnel unterschiedlich ausgeleuchtete Bereiche durchfährt.

Um hier Abhilfe zu schaffen, werden in jüngerer Zeit Tunnelleuchten verwendet, die eine Ausleuchtung der Straße bzw. des Tunnels nach dem Mitstrahlprinzip bewirken. Die Leuchten strahlen zumindest im Wesentlichen nur in Fahrtrichtung mit einer asymmetrischen Lichtstärkeverteilung dergestalt, dass der in Fahrtrichtung betrachtet jeweils vor der Leuchte liegende Halbraum abgeblendet ist. Um dies bei punktförmigen Lichtquellen zu erreichen, können Linsen Verwendung finden, die das Licht der jeweiligen punktförmigen Lichtquelle einfangen und mit asymmetrischer Lichtstärkeverteilung in die gewünschte Richtung abstrahlen, vgl. DE 10 2008 019 944.

Derartige Tunnelleuchten mit den Lichtquellen zugeordneten, asymmetrischen Linsen können an sich eine hervorragende Ausleuchtung der Fahrbahn- und ggf. Tunneloberfläche und des über der Fahrbahn liegenden Raums erreichen, wobei trotz hoher Leuchtdichten eine weitgehende Blendungsfreiheit erreicht und Flickereffekte vermieden werden können. In der Praxis ist die Funktionalität solcher Tunnelleuchten jedoch zeitlich begrenzt, da sich durch Verschmutzungen recht bald lichttechnische Veränderungen ergeben. Insbesondere führen sich an den optischen Lichtaustrittsflächen anlagernde Verschmutzungen sehr schnell dazu, dass an den Verschmutzungspartikeln aufgestreutes Licht bzw. Streulicht die von den Linsen an sich vorgesehene Abstrahlrichtung überlagert und sich auch entgegen der Fahrtrichtung ausbreitet, wodurch die Blendungsfreiheit stark beeinträchtigt wird. Dieser Streulichteffekt tritt insbesondere bei Tunnelleuchten auf, da Feinstaub und andere Verschmutzungspartikel im Tunnel sozusagen gefangen sind und die Verschmutzungskonzentrationen daher in Tunnels deutlich höher sind. Zum anderen können Tunnelleuchten durch die vorgegebene Tunnelhöhe nur in begrenzter Höhe montiert werden, so dass einerseits die Leuchten der Verschmutzung stärker ausgesetzt sind und andererseits per se schwierigere lichttechnische Verhältnisse für die Blendungsfreiheit gegeben sind.

Aus der US 2010/0014290 A1 ist eine Straßenlaterne bekannt, deren LEDs eine Linse zugeordnet ist, die einseitig mit einem Randhöcker versehen ist, in den ein reflektierender Schild eingegossen ist, um sich innerhalb der Linse in unerwünschter Richtung ausbreitendes Licht gleich in der Linse in die gewünschte Richtung zurücklenken zu können. Die vorgenannte Problematik des durch Verschmutzungen an der Lichtaustrittsfläche entstehenden Streulichts wird hierdurch jedoch nicht gelöst, da dieses über die Randerhöhung hinweg und auch seitlich an dem reflektierenden Spiegel vorbei in die an sich unerwünschte Richtung strahlen kann. Ferner ist aus der DE 10 2009 021 182 A1 eine Beleuchtungsvorrichtung für Straßen bekannt, bei der eine asymmetrische Linse mit Randerhöhungen über die LEDs gesetzt wird. Die Randerhöhungen sind dabei jedoch an den Querseiten der Linse in etwa parallel zur Fahrtrichtung vorgesehen, so dass zum einen die Linse ungehindert auch entgegen der Fahrtrichtung abstrahlt und zum anderen auch entstehendes Streulicht entgegen der Fahrtrichtung abgestreut werden kann.

Der vorliegenden Erfindung liegt daher die Aufgabe zugrunde, eine verbesserte Straßen-, insbesondere Tunnelleuchte der genannten Art zu schaffen, die Nachteile des Standes der Technik vermeidet und Letzteren in vorteilhafter Weise weiterbildet. Insbesondere soll eine dauerhaft gleich bleibende Blendungsfreiheit ohne Beeinträchtigung des Betriebswirkungsgrades und der erreichten Leuchtdichten erzielt werden.

Erfindungsgemäß wird diese Aufgabe durch eine Straßen-, insbesondere Tunnelleuchte gemäß Anspruch 1 gelöst. Bevorzugte Ausgestaltungen der Erfindung sind Gegenstand der abhängigen Ansprüche.

Es wird also vorgeschlagen, die den Lichtquellen vorgeschalteten Linsen derart zu gestalten, dass an der Lichtaustrittsfläche der Linse durch angelagerte Verschmutzungen entstehendes Streulicht von der Linse selbst wieder eingefangen und in die gewünschte Richtung abgestrahlt wird, und vor die Linse geschaltete Abdeckscheiben oder andere den Strahlengang beeinflussende Elemente, an denen durch angelagerte Verschmutzung erneut Streulichteffekte entstehen könnten, zu beseitigen. Erfindungsgemäß sind die Linsen freiliegend angeordnet, wobei die Linsen einseitig auf ihrer der Fahrtrichtung entgegengewandten Seite eine höckerförmige Randerhöhung besitzen, deren Außenseite mit einer nach innen hin wirksamen reflektierenden Beschichtung versehen ist, wobei die Randerhöhung eine Höhe über der Grundfläche der Linse von mindestens 125 % der maximalen Höhe h des restlichen Korpus der Linse besitzt und derart ausgebildet ist, daß Streulicht, das durch Verschmutzungen an der Lichtaustrittsfläche der Linse im wesentlichen entgegen der Fahrtrichtung abgestreut wird, von der Randerhöhung im wesentlichen vollständig eingefangen wird. Die integral einstückig an den Linsen angeformten Randhöcker der Linsen bilden einen Abblendabschnitt der Linsen, der an der übrigen Lichtaustrittsfläche der Linsen aufgestreutes und daher an sich in die falsche Richtung abgegebenes Licht einfängt, wobei die höckerförmige Randerhöhung aufgrund ihrer reflektierenden Beschichtung nur einen einseitigen Lichtaustritt in die gewünschte, mit der Fahrtrichtung mitstrahlenden Richtung vorsieht.

Vorteilhafterweise ist die reflektierende Beschichtung der höckerförmigen Randerhöhungen auf der dem übrigen Linsenkorpus abgewandten Außenseite der genannten Randerhöhung vorgesehen, so dass der Korpus der Randerhöhung selbst als Linsenkorpus genutzt werden kann, in dem sich von der Lichtquelle her kommendes Primärlicht ausbreiten und mit dem eingefangenen Streulicht vermischen kann, wodurch eine gleichmäßige Lichtabgabe erzielt wird. Gleichzeitig kann bei minimaler Linsenbaugröße eine maximale Abstrahleffizienz erzielt werden.

Überraschenderweise lassen sich die durch Verschmutzungen und Partikelablagerung hervorgerufenen Streulichtprobleme dadurch lösen, dass die Linsen selbst den Schmutzbelastungen über der Fahrbahn und in Tunnels ausgesetzt werden und nicht in an sich bekannter Weise hinter Abdeckgläsern oder dergleichen geschützt angeordnet werden. Auf den Linsen selbst können die Streulichterscheinungen der Partikelablagerungen nämlich durch eine entsprechende spezielle Formgebung der Linsen gesteuert werden, so dass Streulichtbelastungen entgegen der Fahrtrichtung, die den Verkehr bzw. die Verkehrsteilnehmer blenden würden, unterbunden werden können. Während bisherige Lösungen den Weg beschritten haben, die Linsen bestmöglich vor Verschmutzungen und Partikelanlagerungen zu schützen, beschreitet die vorliegende Erfindung einen entgegengesetzten Weg und lässt Verschmutzungen auf der Linse zu, konturiert die Linse jedoch gezielt so, dass durch Anlagerungen von Partikeln an der Linsenoberfläche keine unerwünschten Streulichtbeeinträchtigungen auftreten.

Insbesondere kann die vorgenannte höckerförmige Randerhöhung der jeweiligen Linse derart konturiert sein, dass die genannte Randerhöhung von der Lichtaustrittsfläche durch dort angelagerte Partikel oder Verschmutzungen aufgestreutes Licht einfängt bzw. abfängt, welches sich entgegen der Fahrtrichtung unter einem Winkel von weniger als 15°, vorzugsweise weniger als 20° ausbreitet. Hierdurch kann das am stärksten blendende Streulicht, welches sich in einem Kegel von 2 x 20° Kegelwinkel mit der Fahrtrichtung als Kegelsymmetrieachse durch Aufstreuung an abgelagerten Schmutzpartikeln entgegen der Fahrtrichtung ausbreitet, abgeblendet werden.

Das aufgestreute Licht kann von der Lichtaustrittsfläche zwar zunächst unter dem genannten Winkel austreten, wird jedoch dann durch die höckerförmige Randerhöhung, die sich vorteilhafterweise an dem der Fahrtrichtung entgegengewandten Randabschnitt der Linse erstreckt, wieder eingefangen. Die genannte Randerhöhung bildet ein integral an den Linsenkorpus angeformtes Ausblendelement, welches näherungsweise entgegen der Fahrtrichtung gerichtetes Streulicht ausblendet. Durch die Randerhöhung eingefangenes Streulicht, das bereits an einem anderen Lichtaustrittsflächenabschnitt der Linse die Linse verlassen hatte, könnte prinzipiell unmittelbar an der Oberfläche der Randerhöhung umgelenkt werden. Vorteilhafterweise tritt das Streulicht jedoch - je nach Auftreffwinkel - in die Randerhöhung ein und wird im Inneren der Randerhöhung von der dort außenseitig angebrachten Reflexionsschicht umgelenkt und in Mitstrahlrichtung, d.h. näherungsweise in Fahrtrichtung oder hierzu nur spitzwinklig geneigt, wieder abgestrahlt, so dass das Streulicht blendungsfrei gemacht wird und überdies auch noch zur weiteren Ausleuchtung der Fahrbahnoberfläche bzw. der Tunneloberfläche genutzt wird, was zu einer weiteren Effizienzerhöhung führt.

Die höckerförmige Randerhöhung kann in Weiterbildung der Erfindung symmetrisch bezüglich einer die Fahrtrichtung enthaltenen Vertikalebene ausgebildet sein, insbesondere wenn die Leuchte mittig über der Fahrbahn montiert ist. Dies kann jedoch je nach Montageposition variieren, beispielsweise dann, wenn die Linsen seitlich zum Fahrbahnrand montiert werden sollen und insofern insbesondere schräg abgestrahltes Licht eingefangen werden soll. In vorteilhafter Weiterbildung der Erfindung jedoch ist die höckerförmige Randerhöhung nur einseitig an der Linse ausgebildet, und zwar auf der der Fahrtrichtung entgegengewandten Seite der Linse, während die in Fahrtrichtung blickende Seite der Linse keine solche Randerhöhung besitzt. Die Linse ist dementsprechend bereits allein durch ihre Randerhöhung nicht rotationssymmetrisch.

Die höckerförmige Randerhöhung auf der der Fahrtrichtung zugewandten Randseite der Linse kann grundsätzlich unterschiedlich konturiert sein, insbesondere unterschiedlich hoch und/oder unterschiedlich breit ausgebildet sein, je nachdem, wie die jeweilige Linse zur Fahrbahn ausgerichtet bzw. angeordnet ist und wie die Fahrbahnführung beschaffen ist, insbesondere in welcher Höhe die Linsen angeordnet sind und ob es sich um ein einspuriges oder mehrspuriges Einbahnstraßen- oder Gegenverkehrsfahrbahnsystem handelt. In vorteilhafter Weiterbildung der Erfindung kann für übliche Einbauhöhen in Tunnels die genannte höckerförmige Randerhöhung der jeweiligen Linse eine Höhe über der Grundfläche der Linse besitzen, die mehr als 135 % der maximalen Höhe des restlichen Linsenkorpus beträgt. Der genannte restliche Linsenkorpus meint dabei den Korpusteil der Linse, an den der einseitige Randhöcker angeformt ist und der im Vergleich zu besagtem Randhöcker einen deutlich größeren Teil der Grundfläche bzw. Oberfläche der Linse einnimmt. Typischerweise kann der einseitig vorgesehene Randhöcker weniger als 25 % der Grundfläche einnehmen, während der besagte restliche Linsenkorpus mehr als 75 % der Grundfläche der Linse ausmacht. Grundfläche meint hierbei die sichtbare Linsenfläche bei einer Blickrichtung entlang einer Hauptnormalen auf die Linse.

In vorteilhafter Weiterbildung der Erfindung kann die höckerförmige Randerhöhung eine Höhe im Bereich von 140 -170 % der maximalen Höhe des restlichen Linsenkorpus besitzen.

Die maximale Höhe des restlichen Linsenkorpus kann hierbei in vorteilhafter Weiterbildung der Erfindung in einem über der Lichtquelle liegenden Mittelabschnitt der Lichtaustrittsfläche vorgesehen sein, von dem aus die Lichtaustrittsfläche zur genannten Randerhöhung hin abfällt. Insbesondere kann die Linse eine insgesamt leicht ballig gewölbte Lichtaustrittsfläche besitzen, die von einem zentralen Mittelabschnitt, in dem sich die maximale Höhe der Linse befindet, zu allen Seiten hin leicht abfällt, und an die sich einseitig die genannte höckerförmige Randerhöhung anschließt. Hierbei bildet sich vor dem genannten Randhöcker eine Art Senke, in der der Linsenkorpus ein lokales Höhenminimum aufweist und von der aus die Lichtaustrittsfläche der Linse in Fahrtrichtung des Verkehrs sowohl zur Randerhöhung als auch in entgegengesetzter Richtung zur entgegengesetzten Seite der Linse hin ansteigt.

Die Randerhöhung erstreckt sich dabei in Fahrtrichtung betrachtet mit einer ausreichenden Breite, um im Wesentlichen die gesamte Linse - bei Betrachtung in Fahrtrichtung - abzudecken bzw. das in der vorgenannten Weise näherungsweise entgegen der Fahrtrichtung abgestreute Streulicht vollständig einzufangen. Insbesondere kann der die verspiegelte Beschichtung tragende Rücken der Linse bzw. der Randerhöhung, welcher Rücken der Fahrtrichtung entgegengewandt ist, eine Breite besitzen, die zumindest näherungsweise der maximalen Breite des Linsenkorpus quer zur Fahrtrichtung entspricht.

Bei Betrachtung der Randerhöhung aus einem Blickwinkel im Wesentlichen parallel zur Fahrtrichtung kann die genannte Randerhöhung vorteilhafterweise einen bogenförmige konturierten Rücken besitzen, dessen Breite im Wurzelbereich der Randerhöhung näherungsweise etwa der maximalen Breite der Linse - bei Betrachtung parallel zur Fahrtrichtung - beträgt. Die Breite des Rückens der Randerhöhung kann sich zum Gipfel der Randerhöhung hin kontinuierlich verjüngen, wobei die Randerhöhung insbesondere eine ovale, elliptische oder kreisbogenförmige Rückenkonturierung besitzen kann.

Die Breite der Randerhöhung im Wurzelbereich der Randerhöhung kann in Weiterbildung der Erfindung zwischen 75 % und 95 % der maximalen Breite der Linse betragen, wenn man die Linse in Fahrtrichtung betrachtet.

Der in Fahrtrichtung hinter der Randerhöhung liegende Korpusteil der Linse besitzt vorteilhafterweise durchgehend eine leicht ballige Konturierung, deren maximale Querschnittsbreite und/oder -länge im Bereich der vorgenannten Linsengrundfläche liegt. Der genannte Linsenkorpus, an den die Randerhöhung anschließt, kann insbesondere - grob gesprochen - die Form eines Halbeis besitzen. In Schnittebenen, die die Hauptnormale auf die Linse enthalten, wölben sich die Randkonturen der Linse in besagtem Hauptkorpusabschnitt kontinuierlich ballig, wie dies näherungsweise bei Querschnitten durch ein Halbellipsoid der Fall ist.

Die höckerförmige Randerhöhung der Linse kann grundsätzlich in verschiedener Art und Weise konturiert sein, beispielsweise leicht ballig und/oder leicht konkav konturiert sein. In vorteilhafter Weiterbildung der Erfindung besitzt die Randerhöhung eine zumindest näherungsweise ebene Innenflanke. Die Innenflanke meint dabei die Flanke der Randerhöhung, die dem restlichen Linsenkorpus zugewandt ist bzw. die Innenseite der Randerhöhung bildet. Die ebene Ausbildung kann sich hierbei über einen mehr oder minder großen Flächenabschnitt der genannten Innenflanke erstrecken, vorteilhafterweise ist hierbei zumindest zwei Drittel der Oberfläche der Innenflanke eben ausgebildet. Durch eine solche ebene Innenflanke kann das von der Lichtaustrittsfläche des restlichen Linsenkorpus wieder eingefangene Streulicht - nach Reflexion an der außenseitig vorgesehenen Reflexionsschicht - gezielt und gerichtet zumindest näherungsweise in Fahrtrichtung wieder abgegeben werden, um die Tunnelausleuchtung nach dem Mitstrahlprinzip zu unterstützen.

Die dem restlichen Linsenkorpus zugewandte Innenflanke der Randerhöhung kann bei ebener Ausbildung grundsätzlich unterschiedlich geneigt angeordnet sein, wobei vorteilhafterweise die genannte Innenflanke der Randerhöhung zu einer Ebene, die senkrecht zur Fahrtrichtung steht, spitzwinklig geneigt angestellt ist, vorzugsweise unter einem Winkel von weniger als 60° geneigt ist. Insbesondere kann in Weiterbildung der Erfindung die Innenflanke der Randerhöhung derart geneigt angeordnet sein, dass eine an die Innenflanke gelegte Hüllebene näherungsweise durch die Lichtquelle geht, die auf der Basisseite der Linse angeordnet ist. Dementsprechend können sich Primärstrahlen, die unmittelbar von der Lichtquelle her kommen und sich in dem Linsenkorpus ausbreiten, durch den Randerhöhungsabschnitt der Linse hindurch ausbreiten, ohne an besagter Innenflanke abgelenkt zu werden. Die genannten Primärstrahlen treffen vielmehr auf die reflektierend ausgebildete Außenflanke der Randerhöhung, an der sie abgelenkt und auf die Innenflanke gerichtet werden, durch die hindurch sie dann in der gewünschten Richtung austreten können.

Die Außenflanke der Randerhöhung kann in Weiterbildung der Erfindung insbesondere derart geneigt sein, dass die genannten Primärstrahlen, die von der Lichtquelle her kommen und sich im Linsenkorpus ausbreiten, an der genannten Außenflanke der Randerhöhung so abgelenkt werden, dass sie näherungsweise senkrecht auf die genannten Innenflanke treffen.

Alternativ oder zusätzlich kann die Außenfläche der Randerhöhung sich konisch erweiternd ausgebildet sein und/oder zu einer Grundfläche der Linse unter einem stumpfen Winkel geneigt sein, insbesondere unter einem Winkel von 95° bis 120°. Die Grundfläche der Linse meint dabei die vorzugsweise zumindest abschnittsweise flach ausgebildete Seite der Linse, auf der die Lichtquelle angeordnet ist, wobei die genannte Grundfläche eine in einem mittleren Abschnitt ausgebildete Vertiefung aufweisen kann, die die Lichteintrittsfläche der Linse bildet und in der die Lichtquelle aufgenommen ist.

In vorteilhafter Weiterbildung der Erfindung besitzen die Linsen jeweils eine ebene Grundfläche, mit der die Linsen flächig auf einer die Lichtquellen tragenden Trägerfläche sitzen. In vorteilhafter Weiterbildung der Erfindung können die Linsen mittels eines aushärtenden Bindemittels, insbesondere in Form von Kunstharz oder dergleichen, auf der Trägerfläche verankert sein derart, dass die jeweilige der Linse zugeordnete Lichtquelle in einem geschlossenen Aufnahmeraum sitzt, der insbesondere von der Linse, der genannten Trägerfläche und dem Bindemittel eingeschlossen bzw. begrenzt wird.

Um die Abblendwirkung gegenüber Streulicht, welches an der Lichtaustrittsfläche der Linsen entsteht, noch weiter zu unterstützen, können den Linsen auch Abblendlamellen zugeordnet sein, die sich vorteilhafterweise jeweils in Fahrtrichtung unmittelbar vor den Linsen erstrecken und an einem Trägerprofil befestigt sein können, welches auch die Linsen und/oder die Lichtquellen trägt.

Die genannten Abblendlamellen können hierbei vorteilhafterweise eine Breite von etwa 125 % bis 200 % der Breite der Linsen und/oder eine Höhe von etwa 125 % bis 200 % der Höhe der Randerhöhungen der Linsen besitzen.

In vorteilhafter Weiterbildung der Erfindung können die Linsen nebst zugehörigen Lichtquellen in Reihe hintereinander auf einem gemeinsamen Trägerprofil angeordnet sein, welches sich bei bestimmungsgemäßem Einbau entlang einer Straße und/oder in einem Tunnel näherungsweise parallel zur Fahrtrichtung erstreckt. Sind Abblendlamellen der vorgenannten Art vorgesehen, können die Abblendlamellen vorteilhafterweise in einer Reihe hintereinander entlang des genannten Trägerprofils angeordnet sein.

Alternativ oder zusätzlich zu einer linienförmigen Anordnung der Lichtquellen hintereinander sind jedoch auch andere Anordnungen möglich, beispielsweise eine mehrreihige oder matrixförmige Anordnung, beispielsweise in der Form eines mehrreihigen Rasters, wobei in jeder Reihe mehrere Linsen nebst zugehörigen Lichtquellen hintereinander angeordnet sind.

In vorteilhafter Weiterbildung der Erfindung schmiegen sich die Abblendlamellen auf ihrer den Linsen zugewandten Seite an die genannten Linsen an, zumindest abschnittsweise in einem Mittelbereich. Die Abblendlamellen können auf ihrer der jeweiligen Linse zugewandten Innenseite eine konkave Wölbung besitzen, in der die Linsen mit der Außenseite ihrer höckerförmigen Randerhöhungen positionierbar sind. Hierdurch können die Abblendlamellen besonders nahe an die Linsen gesetzt werden und dementsprechend auch mit begrenzter Größe wirksam abblenden.

Die genannten Abblendlamellen können auf ihrer der zugehörigen Linse abgewandten Außenseite im Wesentlichen eben ausgebildet sein.

Gegenüber einer Ebene, die senkrecht zur Fahrtrichtung steht, können die Abblendlamellen spitzwinklig geneigt angestellt sein, insbesondere mit ihrer Außenseite, die der zugehörigen Linse abgewandt ist, gegenläufig zur Innenflanke der Randerhöhung geneigt angeordnet sein. Vorteilhafterweise kann eine jeweilige Abblendlamelle unter einem Winkel im Bereich von 30° bis 60°, vorzugsweise etwa 35° bis 45° gegenüber einer Ebene, die senkrecht zur Fahrtrichtung steht, geneigt angestellt sein.

In Weiterbildung der Erfindung sind die der Fahrtrichtung entgegengewandten Außenseiten der Abblendlamellen mattiert und/oder dunkel ausgebildet, um von einer in Fahrtrichtung weiter vorne liegenden Linse erhaltenes Streulicht nicht entgegen der Fahrtrichtung auf die Fahrbahn zurückzustrahlen.

In Weiterbildung der Erfindung kann jede der Linsen der Straßen- bzw. Tunnelbeleuchtung mit ihrer Randerhöhung das durch Verschmutzungen an der Lichtaustrittsfläche abgestreute Licht jeweils selbst vollständig einfangen. Das abgehende Streulicht wird also sozusagen an der Wurzel seiner Entstehung wieder beseitigt.

Die Erfindung wird nachfolgend anhand eines bevorzugten Ausführungsbeispiels und zugehöriger Zeichnungen näher erläutert. In den Zeichnungen zeigen:
- Fig. 1:: eine perspektivische Seitenansicht einer Straßenleuchte nach einem vorteilhaften Ausführungsbeispiel der vorliegenden Erfindung aus einer Blickrichtung von schräg unten vorne, d.h. leicht entgegen der Fahrtrichtung, wobei ein Trägerprofil mit einer Vielzahl von Lamellen sowie an der Unterseite des Trägerprofils angeordnete Lichtquellen mit Linsen sowie zugehörige Abblendlamellen gezeigt sind,
- Fig. 2:: eine Draufsicht auf die Unterseite der Leuchte aus Fig. 1, die die Anordnung zweier Linsen und der zugehörigen zwei Abblendlamellen auf der Unterseite des Trägerprofils zeigt,
- Fig. 3:: einen Längsschnitt durch die Leuchte aus den vorhergehenden Figuren entlang der Linie E-E in Fig. 2,
- Fig. 4:: einen Querschnitt durch die Leuchte aus den vorhergehenden Figuren entlang der Linie C-C in Fig. 2, wobei der Schnitt durch eine Linse und die zugehörige Lichtquelle geht und den in Fahrtrichtung vor dem geschnittenen Linsenkorpus liegenden Randhöcker der Linse und die davor liegende Abblendlamelle zeigt,
- Fig. 5:: einen Querschnitt durch die Leuchte aus den vorhergehenden Figuren entlang der Linie D-D in Fig. 2, wobei der Schnitt durch eine vor einer Linse sitzenden Abblendlamellen geht,
- Fig. 6:: eine perspektivische Darstellung einer Linse der Leuchte aus den vorhergehenden Figuren aus einer Blickrichtung schräg von unten vorne, d.h. leicht entgegen der Fahrtrichtung, die die ebene Innenflanke des Randhöckers und den Übergangsbereich zwischen Randhöcker und dem restlichen Korpus der Linse zeigt,
- Fig. 7:: eine Draufsicht auf die Lichtaustrittsseite der Linse aus Fig. 6,
- Fig. 8:: einen Längsschnitt durch die Linse aus den vorhergehenden Figuren entlang der Linie B-B in Fig. 7,
- Fig. 9:: einen Querschnitt durch die Linse aus den vorhergehenden Figuren entlang der Linie A-A in Fig. 7, und
- Fig. 10:: eine schematische Darstellung des Strahlengangs durch die Linse aus den vorhergehenden Figuren.

Die Figuren zeigen eine Tunnelleuchte 1, die in Form eines modularen Schienensystems aufgebaut ist, das eine Vielzahl von baugleichen schienenförmigen Bausteinen umfasst, die seitlich an eine Tunnelwandung und insbesondere an die Tunneldecke montierbar sind, insbesondere in Form einer oder mehrerer Lichtspuren, die sich in Fahrtrichtung erstrecken.

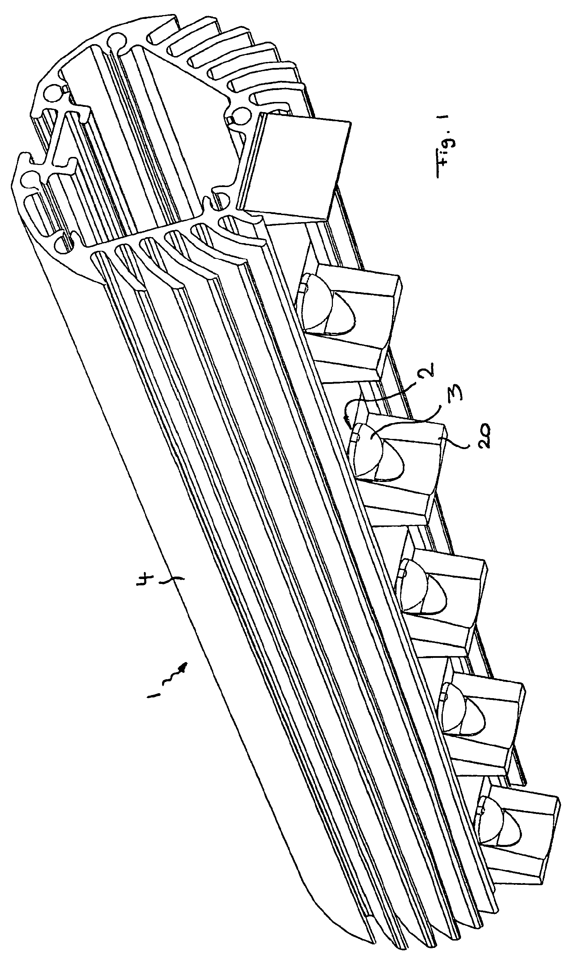

Wie Fig. 1 bis Fig. 3 zeigen, umfasst die Leuchte 1 hierbei vorteilhafterweise einen schienenförmigen Träger 4, auf dem in Reihe hintereinander eine Mehrzahl von Lichtquellen 2 mit zugehörigen Linsen 3 montierbar sind. Der genannten schienenförmige Träger 4 kann vorteilhafterweise als Endlosprofil, insbesondere Strangprofil ausgebildet sein, welches auf die jeweils gewünschte Länge ablängbar ist, so dass eine Vielzahl von Schienenmodulen hintereinander in Reihe beispielsweise an eine Tunneldecke oder -wandung montierbar sind. Alternativ oder zusätzlich zu einer solchen reihenförmigen Anordnung mit einem schienenförmigen Träger kann das Leuchtensystem jedoch auch eine andere Anordnung der Lichtquellen 2 mit zugehörigen Linsen 3 vorsehen, beispielsweise eine mehrreihige Anordnung oder eine matrixförmige Anordnung der Lichtquellen 2 mit zugehörigen Linsen 3 bei einer entsprechenden Ausbildung des Trägers 4, der dann nicht mehr schienenförmigen, sondern mehr flächig ausgebildet sein kann.

Der Träger 4 ist vorteilhafterweise als Hohlprofil ausgebildet, so dass in einem näherungsweise röhrenförmigen Innenraum elektrische Versorgungsbausteine wie Kabel und Leitungen angeordnet werden können. Auf einer bei Deckenmontage unten liegend angeordneten Montageseite besitzt der Träger 4 vorteilhafterweise eine ebene Montagefläche 22 auf der die Lichtquellen 2 nebst zugehörigen Linsen 3 montiert werden können. Über seinen Umfang verteilt kann der Träger 4 vorteilhafterweise eine Mehrzahl von Längslamellen 6 umfassen, die sich längs des Trägers erstrecken und der Wärmeabgabe dienen können, um thermische Belastungen, die durch die Versorgung der Lichtquellen entstehen, an die Umgebung abgeben zu können.

Die Lichtquellen 2 können in vorteilhafter Weiterbildung der Erfindung als LEDs ausgebildet sein, die auf einer Versorgungsplatine montiert sein können und die übliche Auskoppel- bzw. Primärlinse umfassen können, die Teil des LED-Moduls selbst sind.

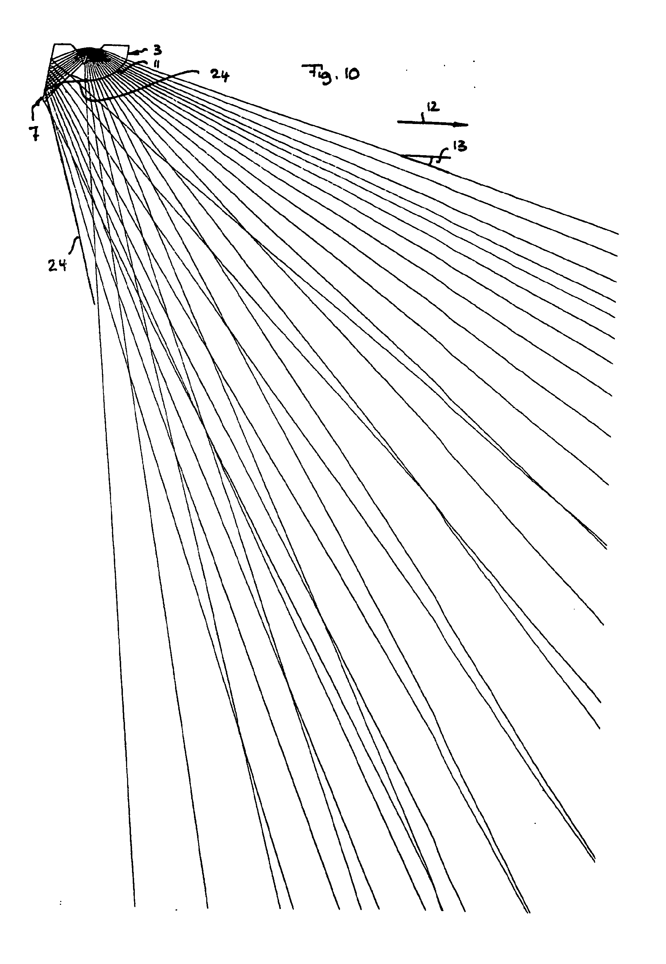

Über den Lichtquellen 2 in Form der genannten LED-Module sitzen asymmetrische Freiformlinsen 3, mittels derer das von den Lichtquellen 2 abgegebene Licht in der gewünschten Weise gebündelt nach dem Mitstrahlprinzip abgegeben wird. Die Leuchten strahlen hierbei zumindest im Wesentlichen nur in Fahrtrichtung mit einer asymmetrischen Lichtstärkeverteilung dergestalt, dass nur der Halbraum, der in Fahrtrichtung betrachtet hinter der jeweiligen Linse liegt, umfasst wird. Der Lichtstrom der Leuchte wird auf einen in Fahrtrichtung betrachtet hinter der Leuchte liegenden Halbraum beschränkt. Insbesondere besitzt die Leuchte 1 einen Ausblendraum, der den in Fahrtrichtung betrachtet vor der Leuchte liegenden Halbraum umfasst, um die in Fahrtrichtung passierenden Verkehrsteilnehmer nicht zu blenden. Durch das Ausleuchten des Tunnels bzw. des Straßenbereichs in Fahrtrichtung werden vor einem bestimmten Fahrzeug herfahrende Fahrzeuge sozusagen von hinten beleuchtet, so dass sie für den dahinter herfahrenden Fahrer gut sichtbar sind. Andererseits wird durch das Ausblenden des entgegen der Fahrtrichtung orientierten Halbraums eine Blendungsfreiheit erreicht. Fig. 10 zeigt den Strahlengang, der von einer Linse abgegeben wird, wobei die Linse in ihrer bestimmungsgemäßen Ausrichtung bei Deckenmontage gezeigt ist und die Fahrtrichtung mit 12 gekennzeichnet ist. In der in Fig. 10 gezeigten vertikalen Ebene erfasst der von einer Linse 3 abgegebene Lichtstrom einen Winkelbereich von etwa 85° bis 20° zur Fahrtrichtung, d.h. schräg nach unten vorne.

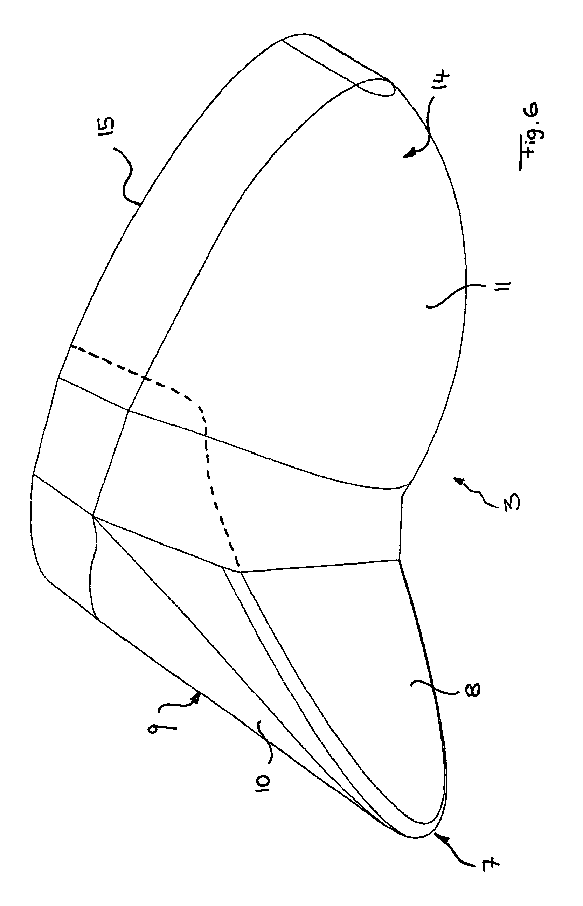

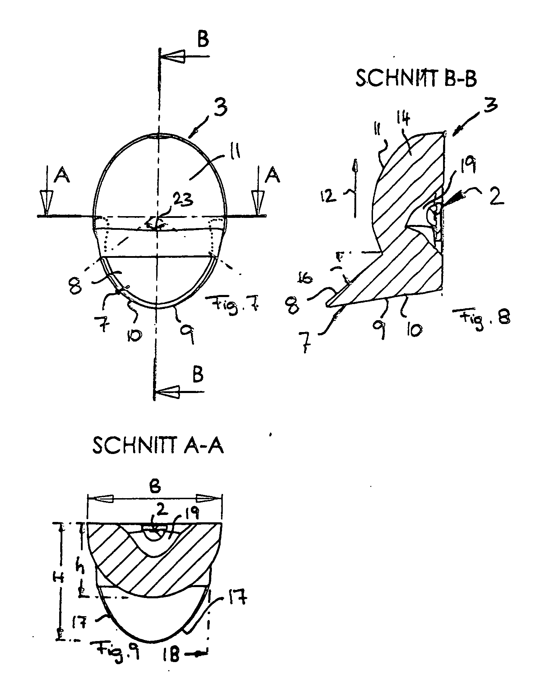

Die Linsen 3, die in den Figuren 6 bis 9 näher gezeigt sind, besitzen eine im Wesentlichen ebene Grundfläche 15, mit der die Linsen 3 auf die Montagefläche 22 der Trägerprofile 4 bzw. eine darauf sitzende Versorgungsplatine montiert werden können. Bei Deckenmontage bildet die genannte Grundfläche 15 der Linsen 3 deren Oberseite. In einem mittleren Abschnitt der Grundfläche 15 umfasst die jeweilige Linse 3 einen napfförmigen Vertiefungsabschnitt, der eine Lichteintrittsausnehmung 19 bildet, mit der die Linse 3 über der jeweiligen Lichtquelle 2 sitzt bzw. über die Lichtquelle 2 gestülpt ist, vgl. Figuren 8 und 9. Die Linse 3 sitzt hierbei mit der Lichteintrittsausnehmung 19 zumindest soweit über der Lichtquelle 2, dass die Linse 3 sämtliches Licht der Lichtquelle 2 einfängt, welches von der Lichtquelle 2 halbraumförmig abgegeben wird.

Um die Linsen 3 auf dem schienenförmigen Träger 4 bzw. der darauf sitzenden Versorgungsplatine befestigen zu können, wird vorteilhafterweise ein Bindemittel in Form von Kunstharz oder eines anderen Klebstoffs verwendet, durch das die Grundflächen 15 der Linsen 3 festgeklebt werden, so dass die Lichtquellen 2 in der genannten Lichteintrittsausnehmung 19 abgedichtet nach außen hin aufgenommen sind. Alternativ oder zusätzlich können auch formschlüssige Haltemittel zum Halten der Linsen 3 vorgesehen sein.

Die Linsen 3 besitzen einen insgesamt ballig ausgebildeten Linsenkorpus 14, der sich kontinuierlich konvex von der genannten Grundfläche 15 aus wölbt, vgl. Fig. 6 in Verbindung mit Figuren 8 und 9. Die ballig konturierte Lichtaustrittsfläche 11 der Linse 3 besitzt dabei in einem mittleren Abschnitt, der unmittelbar über der Lichtquelle 2 liegt, eine maximale Höhe h. Von diesem Punkt maximaler Höhe aus fällt die Lichtaustrittsfläche 11 zu allen Seiten hin leicht ab, insbesondere derart, dass die Linse 3 ihre maximale Breite B im Bereich der Grundfläche 15 besitzt.

Auf einer Randseite besitzt die Linse 3 jedoch eine höckerförmige Randerhöhung 7, deren Höhe H größer ist als die vorgenannte maximale Höhe h des restlichen Linsenkorpus 14. Wie die Figuren 8 und 9 zeigen, kann die maximale Höhe H der genannten Randerhöhung 7 etwa 160 % der maximalen Höhe des Restkorpus der Linse 3 betragen.

Die genannte Randerhöhung 7 ist einseitig auf der der Fahrtrichtung 12 zugewandten Seite der Linse 3 ausgebildet und nimmt vorteilhafterweise weniger als ein Drittel der Grundfläche, vorzugsweise weniger als 25 % der Grundfläche der Linse 3 ein, wenn die Linse 3 in Draufsicht - entsprechend Fig. 7 - betrachtet wird. Insbesondere erstreckt sich die Randerhöhung 7 nur in einem der Fahrtrichtung 12 entgegengewandten Umfangssegment 23, welches entgegen der Fahrtrichtung 12 einen Winkelbereich von weniger als 2 x 60°, vorzugsweise etwa 2 x 45° einnimmt, vgl. Fig. 7.

In Fahrtrichtung betrachtet oder entgegen der Fahrtrichtung betrachtet, besitzt die Randerhöhung 7 einen gleichmäßig gekrümmten, insbesondere bogenförmig konturierten Rücken 17, der beispielsweise näherungsweise elliptisch konturiert sein kann, vgl. Fig. 9. In vorteilhafter Weiterbildung der Erfindung ist der Rücken 17 derart konturiert, dass die maximale Breite des Rückens 17 im Wurzelbereich der Randerhöhung 7 liegt, also in dem Bereich, in dem die Randerhöhung 7 in den restlichen Linsenkorpus 14 übergeht.

Wie die Figuren 8 und 9 zeigen, ist die Innenflanke 8 der Randerhöhung 7 eben konturiert und unter einem spitzen Winkel 16 zu einer Ebene, die senkrecht zur Fahrtrichtung 12 steht, geneigt angestellt. Der besagte Winkel 16 kann vorteilhafterweise im Bereich von 25° bis 65°, insbesondere etwa 30° bis 50° betragen.

Die Außenseite 9 der Randerhöhung 7 ist schalenförmig konturiert, wobei insbesondere in Schnittebenen parallel zur Grundfläche 15 die Außenseite 9 bogenförmig rund konturiert sein kann.

In Schnittebenen senkrecht zur Grundfläche 15 indes kann die Außenseite 9 gerade konturiert sein, vgl. Fig. 8.

Die genannte Außenseite 9 erstreckt sich hierbei vorteilhafterweise unter einem stumpfen Winkel von der Grundfläche 15 ausgehend. Insbesondere kann sich die Außenseite 9 der Randerhöhung 7 näherungsweise konisch von der Grundfläche 15 weg erweitern.

In Weiterbildung der Erfindung kann die genannte Randerhöhung 7 eine rückenlehnenartige Linsenerhöhung bilden, gegenüber der der restliche Linsenkorpus sozusagen den Sitzflächenbereich eines Sessels bildet.

Die besagte Randerhöhung 7 fängt hierbei Streulicht ein, welches sich beispielsweise durch Anlagerung von Schmutzpartikeln an der Lichtaustrittsfläche 11 der Linse 3 bilden kann. Dies verdeutlicht Fig. 10, in der die Bezugsziffer 24 einen Streulicht-Strahlengang zeigt. Auch wenn von der Lichtaustrittsfläche 11 aus ein Streulichtstrom entgegen der Fahrtrichtung 12 entsteht, wird solches Licht von der Randerhöhung 7 abgefangen bzw. eingefangen und zurück in Mitstrahlrichtung umgelenkt und wieder abgegeben.

Die entsprechende Lichtablenkung im Bereich der Randerhöhung 7 kann hierbei durch Totalreflexion an der Kontur der Randerhöhung 7 erfolgen. Insbesondere jedoch kann die genannte Randerhöhung 7 außenseitig mit einer reflektierenden Beschichtung 10 versehen sein, die zur Innenseite der Randerhöhung 7 hin wirksam ist und Strahlen, die sich im Inneren der Randerhöhung 7 ausbreiten, zurück reflektieren und in der gewünschten Mitstrahlrichtung ablenken bzw. austreten lassen. Die genannte reflektierende Beschichtung 10 kann beispielsweise eine zur Innenseite hin wirksame verspiegelnde Beschichtung sein, wobei vorteilhafterweise zur Außenseite hin die Beschichtung 10 mattiert und/oder dunkel ausgebildet ist, um von der Außenseite her auftreffendes Streulicht nicht in Fahrtrichtung zurückzuwerfen.

Die reflektierende Beschichtung kann hierbei grundsätzlich unterschiedlich weit um die Randerhöhung 7 herum gezogen sein, wobei sich die Beschichtung 10 vorteilhafterweise im Wesentlichen über den gesamten Rücken der Linse 3 und deren Randerhöhung 7 erstreckt, welcher Rücken der Fahrtrichtung entgegengewandt ist. Wie die gestrichelten Linien in Fig. 6 und Fig. 7 zeigen, kann die reflektierende Beschichtung 10 hierbei auch über die eigentliche Randerhöhung 7 hinaus auch auf einem Teil des eigentlichen Linsenkorpus vorgesehen sein, und zwar insbesondere derart, dass die gesamte der Fahrtrichtung entgegengewandte Rückseite und/oder bei einer der Fahrtrichtung entsprechenden Blickrichtung sichtbare Außenkontur reflektierend beschichtet ist. Wie Fig. 6 zeigt, kann die reflektierende Beschichtung 10 von der Randerhöhung 7 abfallend bis etwa zur Mitte der Linse an den seitlichen Linsenflächen nach vorne gezogen sein, vgl. die strichlierte Linie in Fig. 6 und Fig. 7.

Wie die Figuren 1, 3, 4 und 5 zeigen, sind den Linsen 3 zur weiteren Abblendung von entgegen der Fahrtrichtung abgegebenem Streulicht Abblendlamellen 20 zugeordnet, die an dem schienenförmigen Träger 4 befestigt sind und sich jeweils auf der der Fahrtrichtung 12 entgegengewandten Seite der Linsen 3 erstrecken. Die genannten Abblendlamellen besitzen eine Höhe von etwa 150 % der Höhe der Randerhöhungen 7 und eine Breite von ebenfalls etwa 150 % der Breite B der Linsen 3.

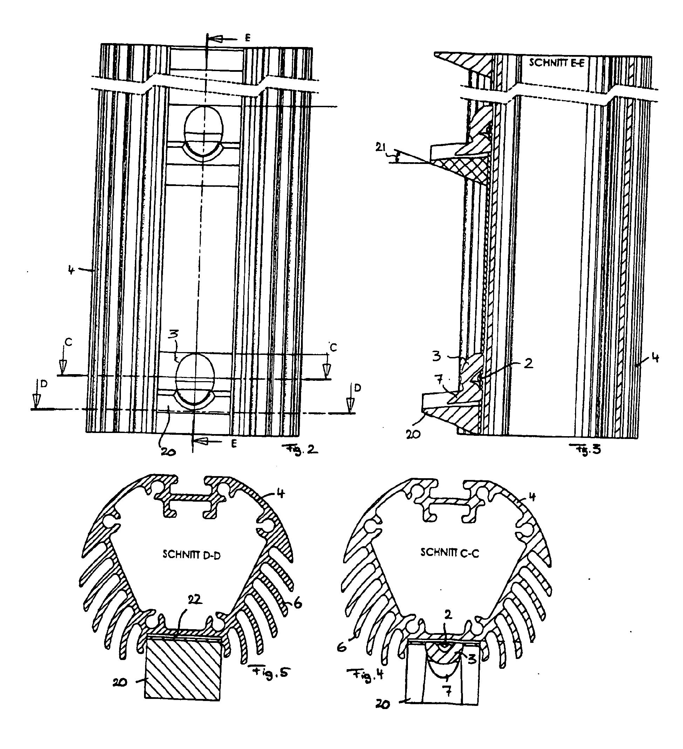

Die Abblendlamellen 20 sind im Querschnitt betrachtet etwa rechteckig ausgebildet, vgl. Fig. 5, wobei die Innenflanken der Abblendlamellen 20 eine konkave Konturausnehmung besitzen, um sich besser an die Linsen 3 anschmiegen zu können. Die den Linsen abgewandte Außenseite der Abblendlamellen 20 ist indes vorteilhafterweise näherungsweise eben ausgebildet, wobei sich die Außenseiten der Abblendlamellen 20 unter einem spitzen Winkel 21 zu einer Ebene erstrecken, die senkrecht zur Fahrtrichtung 12 ausgerichtet ist. Der besagte Winkel 21 kann hierbei vorteilhafterweise etwa 30° bis 50°, vorzugsweise etwa 40° betragen, vgl. Fig. 3.

## Patentansprüche

1. Straßenleuchte, insbesondere Tunnelleuchte, mit einer Mehrzahl von punktförmigen Lichtquellen (2), insbesondere LEDs, denen jeweils eine asymmetrische Linse (3) zur Erzielung einer asymmetrischen Lichtstärkeverteilung und gleichmäßigen Ausleuchtung der Fahrbahn- und ggf. Tunneloberfläche zugeordnet sind, wobei die Linsen (3) derart geformt sind, dass die von den Lichtquellen (2) abgegebenen Lichtströme in Fahrtrichtung strahlen und jeweils auf einen in Fahrtrichtung betrachtet hinter der jeweiligen Lichtquelle (2) liegenden Halbraum beschränkt sind, **dadurch gekennzeichnet, dass** die Linsen (3) freiliegend angeordnet sind und einseitig auf der der Fahrtrichtung entgegengewandten Seite der Linsen (3) jeweils eine höckerförmige Randerhöhung (7) besitzen, die an ihrer Außenseite (9) mit einer nach innen hin wirksamen reflektierenden Beschichtung (10) versehen ist, eine Höhe H über der Grundfläche (15) der Linse (3) von mindestens 125 % der maximalen Höhe h des restlichen Korpus (14) der Linse (3) besitzt und Streulicht, das durch Verschmutzungen an der Lichtaustrittsfläche (11) der Linse (3) entgegen der Fahrtrichtung abgestreut wird, im Wesentlichen vollständig einfängt.

2. Straßenleuchte nach dem vorhergehenden Anspruch, wobei die Randerhöhung (7) derart konturiert ist, dass von der Lichtaustrittsfläche (11) der jeweiligen Linse (3) abgestreutes Licht, welches sich entgegen der Fahrtrichtung (12) unter einem Winkel (13) von weniger als 15°, vorzugsweise weniger als 20°, ausbreitet, von der Randerhöhung (7) im Wesentlichen vollständig ein- oder abgefangen wird.

3. Straßenleuchte nach einem der vorhergehenden Ansprüche, wobei die Höhe H der Randerhöhung (7) über der Grundfläche (15) der Linse (3) mehr als 135 %, insbesondere etwa 140 % bis 170 %, der maximalen Höhe h des restlichen Korpus (14) der Linse (3) beträgt.

4. Straßenleuchte nach einem der vorhergehenden Ansprüche, wobei der von der Randerhöhung (7) abgesehen restliche Linsenkorpus (14) eine maximale Höhe h in einem über der Lichtquelle (2) liegenden Mittelabschnitt der Lichtaustrittsfläche (11) besitzt, von dem aus die genannte Lichtaustrittsfläche (11) zur Randerhöhung (7) hin abfällt.

5. Straßenleuchte nach einem der vorhergehenden Ansprüche, wobei die dem Linsenkorpus (14) zugewandte Innenflanke (8) der Randerhöhung (7) im Wesentlichen eben ausgebildet ist.

6. Straßenleuchte nach einem der vorhergehenden Ansprüche, wobei die dem Linsenkorpus (14) zugewandte Innenflanke (8) der Randerhöhung (7) zu einer Ebene senkrecht zur Fahrtrichtung (12) unter einem Winkel (16) von weniger als 60° geneigt ist und/oder derart geneigt ist, dass eine an die Innenflanke (8) sich anschmiegende Hüllebene im Bereich der Lichtquelle (2) die Grundfläche (15) der Linse (3) schneidet und/oder die Lichtquelle (2) enthält, und/oder wobei die Außenfläche (9) der Randerhöhung (7) sich konisch erweiternd ausgebildet ist und/oder zu einer Grundfläche (15) der Linse (3) unter einem Winkel von mehr als 90°, vorzugsweise etwa 95° bis 120°, geneigt ist.

7. Straßenleuchte nach einem der vorhergehenden Ansprüche, wobei die Randerhöhung (7) in Fahrtrichtung (12) betrachtet einen bogenförmig konturierten, insbesondere oval-, ellipsen- oder kreisbogenförmig konturierten, Rücken (17) besitzt, dessen Breite (18) im Wurzelbereich der Randerhöhung (7) etwa der maximalen Breite der Linse (3), gemessen quer zur Fahrtrichtung, beträgt, wobei sich der Rücken (17) der Randerhöhung (7) insbesondere über etwa die gesamte Höhe (h) des restlichen Linsenkorpus (14) mit der genannten Breite (18) erstreckt, die im Wesentlichen der maximalen Breite der Linse quer zur Fahrtrichtung entspricht.

8. Straßenleuchte nach einem der vorhergehenden Ansprüche, wobei der in Fahrtrichtung (12) hinter der Randerhöhung (7) liegende Korpusteil der Linse (3) eine durchgehend ballige Konturierung besitzt, deren maximale Querschnittsbreite im Bereich der Linsengrundfläche liegt.

9. Straßenleuchte nach einem der vorhergehenden Ansprüche, wobei die Linsen (3) jeweils eine Lichteintrittsausnehmung (19) besitzen, mit der die Linsen (3) über die jeweilige Lichtquelle (2) gestülpt sind, und/oder die Linsen (3) die Lichtquellen (2) kuppelförmig abdecken und/oder die Linsen (3) jeweils eine ebene Grundfläche (15) besitzen, mit der die Linsen flächig auf einer die Lichtquellen (2) tragenden Trägerfläche sitzen.

10. Straßenleuchte nach einem der vorhergehenden Ansprüche, wobei die Linsen (3) mittels eines aushärtenden Bindemittels, insbesondere Kunstharz oder dergleichen, auf einer Trägerfläche verankert sind derart, dass die Lichtquellen (2) von den Linsen (3), der genannten Trägerfläche und dem Bindemittel eingeschlossen sind.

11. Straßenleuchte nach-einem der vorhergehenden Ansprüche, wobei die Linsen (3) reihenförmig hintereinander auf einem Trägerprofil angeordnet sind, wobei jeweils in Fahrtrichtung unmittelbar vor den Linsen (3) Abblendlamellen angeordnet sind, wobei die Abblendlamellen (20) eine Breite von vorzugsweise etwa 125 % bis 200 % der Breite der Linsen (3) und/oder eine Höhe von etwa 125 % bis 200 % der Höhe der Randerhöhungen (7) besitzen.

12. Straßenleuchte nach dem vorhergehenden Anspruch, wobei die Abblendlamellen (20) auf ihrer der jeweiligen Linse (3) zugewandten Innenseite eine konkave Wölbung besitzen, mit der sich die Abblendlamellen um die Linse (3) schmiegen, und/oder auf ihrer der zugehörigen Linse (3) abgewandten Außenseite im Wesentlichen eben ausgebildet sind.

13. Straßenleuchte nach einem der vorhergehenden Ansprüche, wobei die Abblendlamellen (20) gegenüber einer Ebene, die senkrecht zur Fahrtrichtung (12) steht, spitzwinklig geneigt angestellt sind, insbesondere eine der zugehörigen Linse (3) abgewandte Außenseite besitzen, die gegenläufig zur Innenflanke (8) der Randerhöhung (7) zur genannten Ebene senkrecht zur Fahrtrichtung (12) geneigt ist, vorzugsweise unter einem Winkel (21) im Bereich von etwa 30° bis 60°, vorzugsweise etwa 35° bis 45°.

14. Straßenleuchte nach einem der vorhergehenden Ansprüche, wobei jede Linse (3) mit ihrer eigenen Randerhöhung (7) das an ihr selbst durch Verschmutzungen an ihrer Lichtaustrittsfläche (11) entgegen der Fahrtrichtung abgestreute Licht vollständig einfängt.

15. Straßenleuchte nach einem der vorhergehenden Ansprüche, wobei die reflektierende Beschichtung (10) der Randerhöhung (7) sich im Wesentlichen über den gesamten der Fahrtrichtung entgegengewandten Rücken der Linse (3) und deren Randerhöhung (7) erstreckt.

## Claims

1. A street light, in particular a tunnel light, having a plurality of spot-shaped light sources (2), in particular LEDs, with which a respective asymmetric lens (3) is associated for achieving an asymmetric luminance distribution and a uniform illumination of the road surface and optionally of the tunnel surface, wherein the lenses (3) are shaped such that the luminous flux densities emitted by the light sources (2) irradiate in the direction of travel and are respectively restricted to a half-space disposed, viewed in the direction of travel, behind the respective light source (2),
**characterised in that**
the lenses (3) are arranged freely disposed and each have a protuberance-like marginal elevation (7) at one side at the side of the lenses (3) disposed opposite the direction of travel, said marginal elevation being provided at its outer side (9) with an inwardly effective reflective coating (10), having a height H above the base surface (15) of the lens (3) of at least 125% of the maximum height h of the remaining body (14) of the lens (3) and substantially completely capturing scattered light which is scattered against the direction of travel by contaminants at the light exit surface (11) of the lens (3).

2. A street light in accordance with the preceding claim, wherein the marginal elevation (7) is contoured such that light which is scattered by the light exit surface (11) of the respective lens (3) and which propagates against the direction of travel (12) at an angle (13) of less than 15°, preferably less than 20°, is substantially completely captured or intercepted by the marginal elevation (7).

3. A street light in accordance with one of the preceding claims, wherein the height H of the marginal elevation (7) over the base surface (15) of the lens (3) amounts to more than 135%, in particular approximately 140% to 170% of the maximum height h of the remaining body (14) of the lens (3).

4. A street light in accordance with one of the preceding claims, wherein the remaining lens body (14) excluding the marginal elevation (7) has a maximum height h in a central section of the light exit surface (11) disposed above the light source (2), from which central section the named light exit surface (11) falls toward the marginal elevation (7).

5. A street light in accordance with one of the preceding claims, wherein the inner flank (8) of the marginal elevation (7) facing the lens body (14) is substantially planar.

6. A street light in accordance with one of the preceding claims, wherein the inner flank (8) of the marginal elevation (7) facing the lens body (14) is inclined at an angle (16) of less than 60° with respect to a plane perpendicular to the direction of travel (12) and/or is inclined such that an enveloping plane nestling at the inner flank (8) intersects the base surface (15) of the lens (3) in the region of the light source (2) and/or includes the light source (2), and/or wherein the outer surface (9) of the marginal elevation (7) is configured as conically flaring and/or is inclined at an angle of more than 90°, preferably of approximately 95° to 120°, toward a base surface (15) of the lens (3).

7. A street light in accordance with one of the preceding claims, wherein the marginal elevation (7) has an arcuately contoured back (17), in particular a back contoured in the form of an oval, an ellipse or an arc of a circle, viewed in the direction of travel (12), whose width (18) in the root area of the marginal elevation (7) approximately amounts to the maximum width of the lens (3), measured transversely to the direction of travel, wherein the back (17) of the marginal elevation (7) in particular extends over approximately the total height (h) of the remaining lens body (14) by the named width (18) which substantially corresponds to the maximum width of the lens transversely to the direction of travel.

8. A street light in accordance with one of the preceding claims, wherein the body part of the lens (3) disposed behind the marginal elevation (7) in the direction of travel (12) has a continuously spherical contour design whose maximum cross-sectional width is in the region of the base lens surface.

9. A street light in accordance with one of the preceding claims, wherein the lenses (3) each have a light inlet cut-out (19) with which the lenses (3) are pulled over the respective light source (2) and/or the lenses (3) cover the light sources (2) in the manner of a dome and/or the lenses (3) each have a planar base surface (15) with which the lenses are seated areally on a support surface supporting the light sources (2).

10. A street light in accordance with one of the preceding claims, wherein the lenses (3) are anchored at a support surface by means of a hardening bonding agent, in particular a synthetic resin or the like, such that the light sources (2) are enclosed by the lenses (3), the named support surface and the bonding agent.

11. A street light in accordance with one of the preceding claims, wherein the lenses (3) are arranged in a row behind one another on a support section, wherein anti-glare blades are arranged directly before the lenses (3) in the direction of travel, with the anti-glare blades (20) having a width of preferably approximately 125% to 200% of the width of the lenses (3) and/or a height of approximately 125% to 200% of the height of the marginal elevations (7).

12. A street light in accordance with the preceding claim, wherein the anti-glare blades (20) have a concave arching at their inner side facing the respective lens (3), with the anti-glare blades nestling around the lens (3) by said arching, and/or are substantially planar at the outer side remote from the associated lens (3).

13. A street light in accordance with one of the preceding claims, wherein the anti-glare blades (20) are slanted at an acute angle inclination with respect to a plane which is perpendicular to the direction of travel (12), and in particular have an outer side which is remote from the associated lens (3) and which is inclined in the opposite sense to the inner flank (8) of the marginal elevation (7) towards the named plane perpendicular to the direction of travel (12), preferably at an angle (21) in the region of approximately 30° to 60°, preferably approximately 35° to 45°.

14. A street light in accordance with one of the preceding claims, wherein the separate marginal elevation (7) of each lens (3) completely captures the light scattered against the direction of travel at itself by contaminants at the light outlet surface (11).

15. A street light in accordance with one of the preceding claims, wherein the reflective coating (10) of the marginal elevation (7) extends substantially over the total back of the lens (3) and its marginal elevation (7) facing in the opposite sense to the direction of travel.

## Revendications

1. Luminaire de voie publique, en particulier lampe de tunnel, comprenant une pluralité de sources lumineuses (2) ponctuelles, en particulier des LEDs, auxquelles sont associées respectivement une lentille asymétrique (3) en vue d'obtenir une répartition de l'intensité lumineuse asymétrique et un éclairage régulier de la surface de la voie de circulation et le cas échéant du tunnel, les lentilles (3) étant formées de telle manière que les flux lumineux émis par les sources lumineuses (2) rayonnent dans le sens de la circulation et sont limités respectivement à un demi-espace se trouvant derrière la source lumineuse (2) respective, vu dans le sens de la circulation,
**caractérisé en ce que**
les lentilles (3) sont agencées à découvert et possèdent sur un côté, du côté des lentilles (3) opposé au sens de la circulation, respectivement un rehaussement de bord (7) en forme de bosse, qui est pourvu sur son côté extérieur (9) d'un revêtement (10) réfléchissant qui agit vers l'intérieur, qui possède une hauteur H au-dessus de la base (15) de la lentille (3) d'au moins 125 % de la hauteur maximale h du reste du corps (14) de la lentille (3) et qui capture essentiellement entièrement la lumière diffuse qui est réverbérée par des salissures sur la surface d'émission de lumière (11) de la lentille (3) dans le sens inverse au sens de la circulation.

2. Luminaire de voie publique selon la revendication précédente, le contour du rehaussement de bord (7) étant tel que de la lumière réverbérée par la surface d'émission de lumière (11) de la lentille (3) respective, qui se propage dans le sens inverse au sens de la circulation (12) selon un angle (13) inférieur à 15°, de préférence inférieur à 20°, est capturée ou interceptée essentiellement entièrement par le rehaussement de bord (7).

3. Luminaire de voie publique selon l'une des revendications précédentes, dans lequel la hauteur H du rehaussement de bord (7) au-dessus de la base (15) de la lentille (3) correspond à plus de 135 %, en particulier environ 140 % à 170 %, de la hauteur maximale h du reste du corps (14) de la lentille (3).

4. Luminaire de voie publique selon l'une des revendications précédentes, dans lequel le reste du corps (14) de lentille, hors le rehaussement de bord (7), possède une hauteur maximale h dans une section centrale de la surface d'émission de lumière (11) se trouvant au-dessus de la source lumineuse (2), section centrale à partir de laquelle ladite surface d'émission de lumière (11) descend en direction du rehaussement de bord (7).

5. Luminaire de voie publique selon l'une des revendications précédentes, dans lequel le flanc intérieur (8) du rehaussement de bord (7) orienté vers le corps (14) de lentille est formé sensiblement plan.

6. Luminaire de voie publique selon l'une des revendications précédentes, dans lequel le flanc intérieur (8) du rehaussement de bord (7) orienté vers le corps (14) de lentille est incliné selon un angle (16) de moins de 60° par rapport à un plan perpendiculaire au sens de la circulation (12) et/ou est incliné de telle manière qu'un plan enveloppe épousant la forme du flanc intérieur (8) dans la zone de la source lumineuse (2) coupe la base (15) de la lentille (3) et/ou comprend la source lumineuse (2), et/ou dans lequel la surface extérieure (9) du rehaussement de bord (7) est formée s'élargissant de manière conique et/ou est inclinée par rapport à une base (15) de la lentille (3) selon un angle de plus de 90°, de préférence d'environ 95° à 120°.

7. Luminaire de voie publique selon l'une des revendications précédentes, dans lequel le rehaussement de bord (7) vu dans le sens de la circulation (12) possède une partie dorsale (17) au contour arqué, en particulier ovale, ellipsoïde ou en arc de cercle, dont la largeur (18) dans la zone d'origine du rehaussement de bord (7) correspond à environ la largeur maximale de la lentille (3), mesurée transversalement au sens de la circulation, dans lequel la partie dorsale (17) du rehaussement de bord (7) s'étend en particulier sur environ la hauteur totale (h) du reste du corps (14) de lentille avec ladite largeur (18) qui correspond essentiellement à la largeur maximale de la lentille transversalement au sens de la circulation.

8. Luminaire de voie publique selon l'une des revendications précédentes, dans lequel la partie de corps de la lentille (3) se trouvant derrière le rehaussement de bord (7) dans le sens de la circulation possède un contour bombé sans interruption dont la largeur de section transversale maximale se trouve dans la zone de la base de lentille.

9. Luminaire de voie publique selon l'une des revendications précédentes, dans lequel les lentilles (3) possèdent chacune un évidement d'entrée de lumière (19) avec lequel les lentilles (3) sont enfoncées au-dessus de la source lumineuse (2) respective, et/ou les lentilles (3) recouvrent les sources lumineuses (2) en formant un dôme et/ou les lentilles (3) possèdent chacune une base (15) plane avec laquelle les lentilles reposent à plat sur une surface de support qui porte les sources lumineuses (2).

10. Luminaire de voie publique selon l'une des revendications précédentes, dans lequel les lentilles (3) sont ancrées sur une surface de support au moyen d'un adhésif thermodurcissable, en particulier une résine synthétique ou similaire, de telle manière que les sources lumineuses (2) sont entourées par les lentilles (3), ladite surface de support et l'adhésif.

11. Luminaire de voie publique selon l'une des revendications précédentes, dans lequel les lentilles (3) sont agencées sous forme de rangées les unes derrières les autres sur un profilé de support, dans lequel des lamelles de diaphragme sont agencées respectivement dans le sens de la circulation directement devant les lentilles (3), dans lequel les lamelles de diaphragme (20) possèdent une largeur correspondant de préférence à environ 125 % à 200 % de la largeur des lentilles (3) et/ou une hauteur correspondant à environ 125 % à 200 % de la hauteur des rehaussements de bord (7).

12. Luminaire de voie publique selon la revendication précédente, dans lequel les lamelles de diaphragme (20) possèdent sur leur face intérieure orientée vers la lentille (3) respective une courbure concave, avec laquelle les lamelles de diaphragme épousent la forme de la lentille (3), et/ou sont formées sensiblement planes sur leur face extérieure opposée à la lentille (3) associée.

13. Luminaire de voie publique selon l'une des revendications précédentes, dans lequel les lamelles de diaphragme (20) sont réglées inclinées en angle aigu par rapport à un plan qui se trouve perpendiculaire au sens de la circulation (12), possèdent en particulier une face extérieure opposée à la lentille (3) associée qui est inclinée dans le sens contraire au flanc intérieur (8) du rehaussement de bord (7) par rapport audit plan perpendiculaire au sens de la circulation (12), de préférence selon un angle (21) dans la plage d'environ 30° à 60°, de préférence d'environ 35° à 45°.

14. Luminaire de voie publique selon l'une des revendications précédentes, dans lequel chaque lentille (3) capture entièrement avec son propre rehaussement de bord (7) la lumière réverbérée sur elle-même par des salissures sur sa surface d'émission de lumière (11) dans le sens contraire au sens de la circulation.

15. Luminaire de voie publique selon l'une des revendications précédentes, dans lequel le revêtement (10) réfléchissant du rehaussement de bord (7) s'étend essentiellement sur toute la partie dorsale de la lentille (3) et de son rehaussement de bord (7) faisant face au sens de la circulation.
